# EUROPEAN PATENT APPLICATION

(11) **EP 4 636 534 A2**
(43) Date of publication of application: **22.10.2025**
(21) Application number: 25195173.7
(22) Date of filing: 11.08.2025
(51) Int. Cl.: G06F 1/04

(54) **CLOCK PROTECTION CIRCUIT, CLOCK PROTECTION METHOD, STORAGE MEDIUM AND ELECTRONIC DEVICE**

(30) Priority: 28.08.2024 CN 202411194664
(71) Applicant: Beijing Horizon Information Technology Co., Ltd., Beijing 100094 (CN)
(72) Inventor: CHEN, Chen, Beijing, 100094 (CN); LI, Wenxing, Beijing, 100094 (CN); LI, Jing, Beijing, 100094 (CN); YANG, Ruiqi, Beijing, 100094 (CN); YU, Zhengyan, Beijing, 100094 (CN); LI, Siqi, Beijing, 100094 (CN)
(74) Representative: Dehns Germany Partnerschaft mbB

(57) **Abstract**

Disclosed are a clock protection circuit, a clock protection method, a storage medium, and an electronic device. The clock protection circuit includes: a clock monitoring module, configured for performing, based on a backup clock signal generated by a backup clock source, fault monitoring on a functional clock signal generated by a functional clock source to obtain a fault monitoring result, and determining a target clock signal from the backup clock signal and the functional clock signal based on the fault monitoring result; a clock processing module, configured for determining a safe clock signal for transmission to the functional module based on the target clock signal. The embodiments of the present disclosure may ensure the reliability of the clock signal used by the functional module, which is beneficial for ensuring the normal and reliable operation of the functional module.

## Description

### TECHNICAL FIELD

The present disclosure relates to functional safety technology, and in particular to a clock protection circuit, a clock protection method, a storage medium, and an electronic device.

### BACKGROUND

At present, chips are widely used. Various functional modules in the chip typically need to use a clock signal. It is a noteworthy problem for those skilled in the art how to ensure the reliability of the clock signal used by the functional module.

### SUMMARY

In order to solve the above technical problems, the present disclosure provides a clock protection circuit, a clock protection method, a storage medium and an electronic device.

According to one aspect of an embodiment of the present disclosure, there is provided a clock protection circuit, including:
a clock monitoring module, configured for performing, based on a backup clock signal generated by a backup clock source, fault monitoring on a functional clock signal generated by a functional clock source to obtain a fault monitoring result, and determining a target clock signal from the backup clock signal and the functional clock signal based on the fault monitoring result;
a clock processing module, configured for determining a safe clock signal for transmission to a functional module based on the target clock signal.

According to another aspect of an embodiment of the present disclosure, there is provided a clock protection method, including:
performing, based on a backup clock signal generated by a backup clock source, a fault monitoring on a functional clock signal generated by a functional clock source to obtain a fault monitoring result;
determining a target clock signal from the backup clock signal and the functional clock signal based on the fault monitoring result;
determining a safe clock signal for transmission to a functional module based on the target clock signal.

According to still another aspect of an embodiment of the present disclosure, there is provided a computer-readable storage medium, on which a computer program is stored, where the computer program, when executed by a processor, causes the processor to implement the clock protection method as above.

According to yet still another aspect of the embodiments of the present disclosure, there is provided an electronic device, including:
a processor;
a memory for storing instructions executable by the processor;
wherein the processor is configured for reading the executable instructions from the memory and execute the instructions to implement the clock protection method as above.

According to yet still another aspect of an embodiment of the present disclosure, there is provided a computer program product, in which instructions are stored, where the instructions, when executed by a processor, causes the processor to implement the clock protection method as above.

Based on the clock protection circuit, clock protection method, storage medium, electronic device and program product according to the above aspects of the present disclosure, two types of clock sources may be provided, namely, a functional clock source and a backup clock source. The clock monitoring module may perform, based on the backup clock signal generated by the backup clock source, fault monitoring on the functional clock signal generated by the functional clock source, so as to reasonably determine the target clock signal from the backup clock signal and the functional clock signal according to the fault monitoring result. The clock processing module may determine the safe clock signal for transmission to the functional module based on the target clock signal. It may be seen that, in the embodiments of the present disclosure, through the providing of two types of clock sources, and the collaborative operation of the clock monitoring module and the clock processing module, regardless of whether there is an abnormality in the functional clock signal, the functional module may be provided with a clock signal (i.e., a safe clock signal) required for its operation and having no fault. In this way, it is beneficial for ensuring the reliability of the clock signal used by the functional module, thereby ensuring the normal and reliable operation of the functional module, and ensuring the normal operation of the chip where the functional module is located.

### BRIEF DESCRIPTION OF DRAWINGS

FIG 1 is a schematic diagram of a clock protection architecture in some exemplary embodiments of the present disclosure.
FIG 2 is a schematic diagram of a structure of a clock protection circuit provided by some exemplary embodiments of the present disclosure.
FIG 3 is a schematic diagram of a signal waveform of a functional clock signal in some exemplary embodiments of the present disclosure.
FIG 4 is a schematic diagram of a signal waveform of functional clock signals in some other exemplary embodiments of the present disclosure.
FIG 5 is a schematic diagram of a structure of a clock monitoring module in some exemplary embodiments of the present disclosure.
FIG 6 is a schematic diagram of a structure of a clock protection circuit provided by other exemplary embodiments of the present disclosure.
FIG 7 is a schematic diagram of a clock protection architecture in some other exemplary embodiments of the present disclosure.
FIG 8 is a schematic flowchart diagram of a clock protection method provided by some exemplary embodiments of the present disclosure.
FIG 9 is a schematic flowchart of a method for obtaining a fault monitoring result provided by some exemplary embodiments of the present disclosure.
FIG 10 is a schematic flowchart of a method for obtaining a safe clock signal provided by some exemplary embodiments of the present disclosure.
FIG 11 is a schematic diagram of a structure of a clock protection method provided by other exemplary embodiments of the present disclosure.
FIG 12 is a schematic diagram of a structure of an electronic device provided by some exemplary embodiments of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are only part of the embodiments of the present disclosure, rather than all the embodiments. It should be understood that the present disclosure is not limited to the exemplary embodiments.

It should be noted that unless otherwise specifically stated, the relative arrangements, numerical expressions, and numerical values of components and steps set forth in these embodiments do not limit the scope of the present disclosure.

### Application Overview

Chip technology is the cornerstone of modern scientific and technological development. Chips may be applied to many fields, including but not limited to consumer electronics, communications, computers, medical treatment, automobiles, the Internet of Things, etc. If the chip is applied to the automotive field, the chip may be, for example, an intelligent driving chip.

Various functional modules in a chip typically require the use of a clock signal. Specifically, various functional modules in a chip may rely on the time reference provided by the clock signal, on which basis, the operations of various functional modules can be accurately synchronized, so that different functional modules can operate collaboratively, effectively avoiding data conflicts and confusion in functional execution. Optionally, a functional module may also be called an IP module.

How to ensure the reliability of the clock signal used by the functional module is a noteworthy problem for those skilled in the art.

### Exemplary System

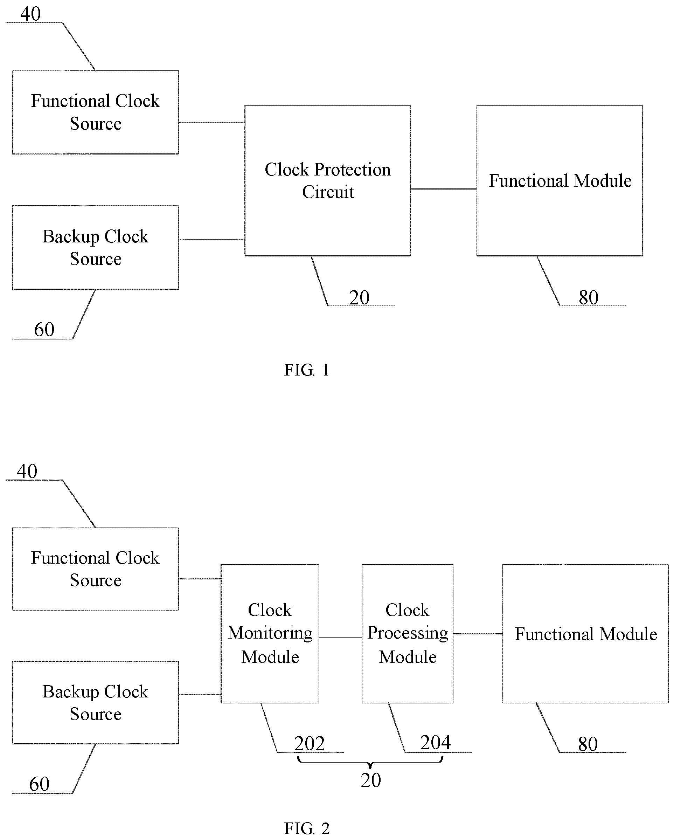

FIG 1 is a schematic diagram of a clock protection architecture in some exemplary embodiments of the present disclosure. The clock protection architecture shown in FIG 1 may include: a clock protection circuit 20, a functional clock source 40, a backup clock source 60 and a functional module 80.

Optionally, the functional clock source 40 may be a clock source for generating a functional clock signal, and the backup clock source 60 may be a clock source for generating a backup clock signal. The functional clock signal generated by the functional clock source 40 and the backup clock signal generated by the backup clock source 60 may be independent of each other and do not affect each other. The functional clock source 40 and the backup clock source 60 may be electrically connected to the clock protection circuit 20, respectively. The clock protection circuit 20 may also be electrically connected to the functional module 80.

In the embodiments of the present disclosure, when there is no fault in the functional clock signal generated by the functional clock source 40, the clock protection circuit 20 may determine a clock signal required for the functional module 80 to operate and having no fault based on the functional clock signal generated by the functional clock source 40, and transmit the determined clock signal to the functional module 80. When there is a fault in the functional clock signal generated by the functional clock source 40, the clock protection circuit 20 may determine a clock signal required for the functional module 80 to operate and having no fault based on the backup clock signal generated by the backup clock source 60, and transmit the determined clock signal to the functional module 80. In this way, it is beneficial for ensuring the reliability of the clock signal used by the functional module 80, thereby ensuring the normal and reliable operation of the functional module 80, and ensuring the normal operation of the chip where the functional module 80 is located.

### Exemplary Circuit

FIG 2 is a schematic diagram of a structure of a clock protection circuit 20 provided in some exemplary embodiments of the present disclosure. As shown in FIG. 2, the clock protection circuit 20 may include:
a clock monitoring module 202, configured for performing fault monitoring on the functional clock signal generated by the functional clock source 40 based on the backup clock signal generated by the backup clock source 60 to obtain a fault monitoring result, and determine a target clock signal from the backup clock signal and the functional clock signal based on the fault monitoring result;
a clock processing module 204, configured for determining a safe clock signal for transmission to the functional module 80 based on the target clock signal.

Optionally, the clock monitoring module 202 may be a module capable of performing clock monitoring on the functional clock source 40. The clock processing module 204 may be a module capable of processing clock faults. The clock monitoring module 202 may be electrically connected to the functional clock source 40 and the backup clock source 60, respectively. The clock processing module 204 may be electrically connected to the clock monitoring module 202 and the functional module 80, respectively.

Through the electrical connection between the clock monitoring module 202 and the functional clock source 40, the functional clock source 202 may transmit the functional clock signal to the clock monitoring module 202, and accordingly, the clock monitoring module 202 may receive the functional clock signal. Through the electrical connection between the clock monitoring module 202 and the backup clock source 60, the backup clock source 60 may transmit the backup clock signal to the clock monitoring module 202, and accordingly, the clock monitoring module 202 may receive the backup clock signal. The clock monitoring module 202 may perform fault monitoring on the functional clock signal based on the backup clock signal to obtain a fault monitoring result, which may indicate whether the functional clock signal has a fault. For example, the clock monitoring module 202 may determine whether the waveform of the functional clock signal meets expectations based on the backup clock signal. If the waveform of the functional clock signal meets expectations, the fault monitoring result may indicate that the functional clock signal has no fault. If the waveform of the functional clock signal does not meet expectations, the fault monitoring result may indicate that the functional clock signal has a fault.

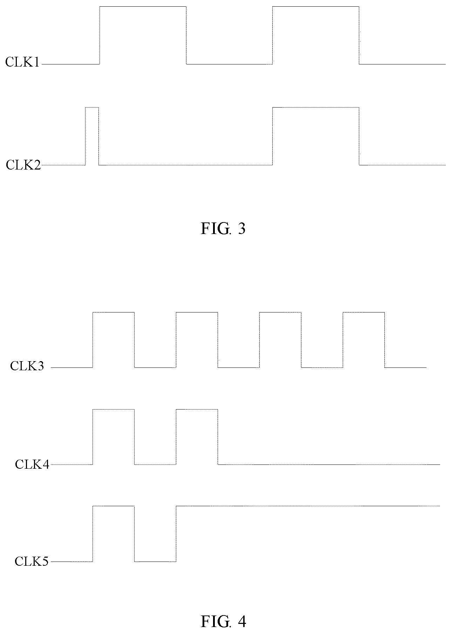

Optionally, if there is a fault in the functional clock signal, a fault type of the functional clock signal may include, but is not limited to, a frequency fault type and a stuck-at fault type. Assuming that the functional clock signal without a fault is shown as CLK1 in FIG 3, the functional clock signal with a frequency fault type may be shown as CLK2 in FIG 3, where it is easy to see that there are glitches in CLK2. Assuming that the functional clock signal without a fault is shown as CLK3 in FIG 4, the functional clock signal with a stuck-at fault type may be shown as CLK4 or CLK5 in FIG 4.

The clock monitoring module 202 may determine the target clock signal from the backup clock signal and the functional clock signal based on the fault monitoring result. The target clock signal may be a clock signal between the backup clock signal and the functional clock signal that matches the fault monitoring result. Through the electrical connection between the clock processing module 204 and the clock monitoring module 202, the clock monitoring module 202 may transmit the target clock signal to the clock processing module 204, and accordingly, the clock processing module 204 may receive the target clock signal.

The clock processing module 204 may determine a safe clock signal for transmission to the functional module 80 based on the target clock signal. The safe clock signal may be understood as a clock signal that is required for the functional module 80 to operate and has no fault. Through the electrical connection between the clock processing module 204 and the functional module 80, the clock processing module 204 may transmit the safe clock signal to the functional module 80, and accordingly, the functional module 80 may receive the safe clock signal, wherein the functional module 80 may operate normally relying on the time reference provided by the safe clock signal.

In the embodiments of the present disclosure, two types of clock sources may be provided, namely, a functional clock source 40 and a backup clock source 60. The clock monitoring module 202 may perform fault monitoring on the functional clock signal generated by the functional clock source 40 based on the backup clock signal generated by the backup clock source 60, so as to reasonably determine the target clock signal from the backup clock signal and the functional clock signal according to a fault monitoring result. The clock processing module 204 may determine the safe clock signal for transmission to the functional module 80 based on the target clock signal. It may be seen that, in the embodiments of the present disclosure, through the providing of two types of clock sources and the collaborative operation of the clock monitoring module 202 and the clock processing module 204, regardless of whether there is an abnormality in the functional clock signal, the functional module 80 may be provided with a clock signal (i.e., a safe clock signal) required for its operation and having no fault. In this way, it is beneficial for ensuring the reliability of the clock signal used by the functional module 80, thereby ensuring the normal and reliable operation of the functional module 80, and ensuring the normal operation of the chip where the functional module 80 is located.

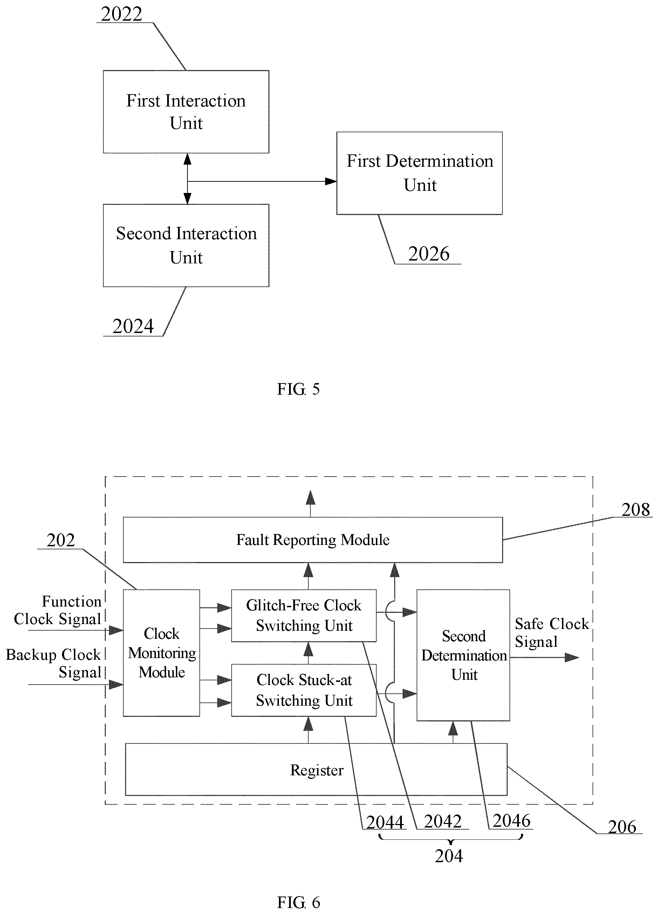

In some optional examples, as shown in FIG 5, the clock monitoring module 202 may include: a first interaction unit 2022, a second interaction unit 2024, and a first determination unit 2026.

The clock monitoring module 202, configured for performing fault monitoring on the functional clock signal generated by the functional clock source 40 based on the backup clock signal generated by the backup clock source 60 to obtain a fault monitoring result, may include:
the first interaction unit 2022, configured for generating a handshake request in response to a rising edge occurring in the backup clock signal;
the second interaction unit 2024, configured for generating a response to the handshake request under driving of the functional clock signal in response to receiving the handshake request;
the first determination unit 2026, configured for counting a number of times the second interaction unit 2024 fails to generate a response within a preset time period after receiving the handshake request, determining a first numerical relationship between the counted number of times and a preset number of times, and determining a fault monitoring result based on the first numerical relationship.

Optionally, the first interaction unit 2022 and the second interaction unit 2024 may both be units for information interaction. The first determination unit 2026 may be a unit for determining a fault monitoring result. The first interaction unit 2022 may be electrically connected to the second interaction unit 2024. A line for electrical connection may be provided between the first interaction unit 2022 and the second interaction unit 2024, and the first determination unit 2026 may be electrically connected to the line.

Optionally, the backup clock signal may be defaulted to a clock signal without a fault. As an example, the backup clock signal may be a square wave signal.

Whenever a rising edge occurs in the backup clock signal, the first interaction unit 2022 may generate a handshake request. Through the electrical connection between the first interaction unit 2022 and the second interaction unit 2024, the first interaction unit 2022 may transmit the generated handshake request to the second interaction unit 2024, and accordingly, the second interaction unit 2024 may receive the handshake request.

Whenever the handshake request is received by the second interaction unit 2024, the second interaction unit 2024 may generate a response to the handshake request under driving of the functional clock signal.

It should be noted that, since the generation of the response to the handshake request needs to rely on the driving of the functional clock signal, when there is no fault in the functional clock signal, the response to the handshake request may generally be generated normally, and when there is a fault in the functional clock signal, the response to the handshake request may not be generated normally. The first determination unit 2026 may count the number of times the second interaction unit 2024 fails to generate a response within a preset time period after receiving the handshake request. The duration of the preset time period may be a duration pre-configured by the software, which may be a maximum duration required for the generation of the response to the handshake request.

The first determination unit 2026 may determine a first numerical relationship between the counted number of times and a preset number of times. For example, the first determination unit 2026 may compare the counted number of times with the preset number of times, and determine the magnitude relationship between the counted number of times and the preset number of times as the first numerical relationship. As an example, the preset number of times may be 3, 4, 5, 6, etc., which are not listed here exhaustively.

If the first numerical relationship indicates that the number of times counted is greater than the preset number, it means that the number of times the second interaction unit 2024 fails to generate a response normally is not within a reasonable range, and the second interaction unit 2024 and the first interaction unit 2022 may not shake hands normally, which is most likely caused by a fault in the functional clock signal. Then, the fault monitoring result determined by the first determination unit 2026 may indicate that there is a fault in the functional clock signal.

If the first numerical relationship indicates that the number of statistics is less than or equal to the preset number of times, this means that the number of times the second interaction unit 2024 fails to generate a response normally is within a reasonable range, and the second interaction unit 2024 and the first interaction unit 2022 may shake hands normally, then the fault monitoring result determined by the first determination unit 2026 may indicate that there is no fault in the functional clock signal.

In some embodiments, instead of determining the magnitude relationship between the counted number of times and the preset number of times as the first numerical relationship, a proportional relationship or linear relationship between the counted number of times and the preset number of times may be determined as the first numerical relationship. For example, the ratio of the counted number of times to the preset number of times may be used as the first numerical relationship. If the ratio of the counted number of times to the preset number of times is greater than a preset ratio, the fault monitoring result determined by the first determination unit 2026 may indicate that there is a fault in the functional clock signal. If the ratio of the counted number of times to the preset number of times is less than or equal to the preset ratio, the fault monitoring result determined by the first determination unit 2026 may indicate that there is no fault in the functional clock signal. As an example, the preset ratio may be 0.7, 0.75, 0.8, 0.85, etc., which are not listed exhaustively here.

In the embodiments of the present disclosure, the number of times the second interaction unit 2024 fails to generate a response within a preset time period after receiving the handshake request may be used for determining a state of the generation of the response to the handshake request. Since the response to the handshake request needs to be generated under the driving of the functional clock signal, by referring to the state of the generation of the response to the handshake request, it is possible to efficiently and reliably infer whether the functional clock signal has a fault, so as to obtain a fault monitoring result. In addition, since the clock monitoring module 202 includes the first interaction unit 2022, the second interaction unit 2024 and the first determination unit 2026, the clock monitoring module 202 has a simple structure and low cost.

In some optional examples, the clock monitoring module 202, configured for determining the target clock signal from the backup clock signal and the functional clock signal based on the fault monitoring result, may include:
a clock monitoring module 202, configured for determining the target clock signal including a backup clock signal and a functional clock signal in response to a fault monitoring result indicating that the functional clock signal has a fault;
   or,
the clock monitoring module 202, configured for determining the functional clock signal as a target clock signal in response to the fault monitoring result indicating that the functional clock signal has no fault.

If the fault monitoring result indicates that the functional clock signal has no fault, the target clock signal determined by the clock monitoring module 202 may include only the functional clock signal. After receiving the target clock signal from the clock monitoring module 202, the clock processing module 204 may use the functional clock signal without a fault to determine the safe clock signal, beneficial for ensuring the reliability of the clock signal used by the functional module 80.

If the fault monitoring result indicates that the functional clock signal has a fault, the target clock signal determined by the clock monitoring module 202 may include both the backup clock signal and the functional clock signal. After receiving the target clock signal from the clock monitoring module 202, the clock processing module 204 may switch from the clock signal with a fault to the backup clock signal, so that the backup clock signal without a fault is used for determining the safe clock signal, beneficial for ensuring the reliability of the clock signal used by the functional module 80.

In some optional examples, as shown in FIG. 6, the clock processing module 204 may include: a glitch-free clock switching unit 2042, a clock stuck-at switching unit 2044, and a second determination unit 2046.

The clock processing module 204, configured for determining the safe clock signal for transmission to the functional module 80 based on the target clock signal, may include:
the glitch-free clock switching unit 2042, configured for outputting the backup clock signal in response to the receiving of the target clock signal including the backup clock signal and the functional clock signal;
the clock stuck-at switching unit 2044, configured for outputting the backup clock signal in response to the receiving of the target clock signal including the backup clock signal and the functional clock signal;
the second determination unit 2046, configured for determining the safe clock signal based on the backup clock signal output from one of the glitch-free clock switching unit 2042 and the clock stuck-at switching unit 2044.

Optionally, both the glitch-free clock switching unit 2042 and the clock stuck-at switching unit 2044 may be units for switching from the functional clock signal to the backup clock signal. The main difference between the glitch-free clock switching unit 2042 and the clock stuck-at switching unit 2044 lies in that the glitch-free clock switching unit 2042 is suitable for switching from the functional clock signal with a frequency fault type to a backup clock signal, and the clock stuck-at switching unit 2044 is suitable for switching from the functional clock signal with a stuck-at fault type to a backup clock signal. It should be noted that clock signal switching is an inherent function of the glitch-free clock switching unit 2042 and the clock stuck-at switching unit 2044. The specific switching principle may refer to the operating principle of the two switching units in the relevant technology, which will not be repeated here. In addition, the glitch-free clock switching unit 2042 and the clock stuck-at switching unit 2044 may be electrically connected to the clock monitoring module 202, respectively. The second determination unit 2046 may be electrically connected to the glitch-free clock switching unit 2042 and the clock stuck-at switching unit 2044, respectively.

Through the electrical connection between the glitch-free clock switching unit 2042 and the clock monitoring module 202, the clock monitoring module 202 may transmit the target clock signal including the backup clock signal and the functional clock signal to the glitch-free clock switching unit 2042, and accordingly, the glitch-free clock switching unit 2042 may receive the target clock signal including the backup clock signal and the functional clock signal. Through the clock signal switching at the glitch-free clock switching unit 2042, the glitch-free clock switching unit 2042 may output a glitch-free backup clock signal. Through the electrical connection between the second determination unit 2046 and the glitch-free clock switching unit 2042, the second determination unit 2046 may receive the backup clock signal output from the glitch-free clock switching unit 2042.

Through the electrical connection between the clock stuck-at switching unit 2044 and the clock monitoring module 202, the clock monitoring module 202 may transmit the target clock signal including the backup clock signal and the functional clock signal to the clock stuck-at switching unit 2044, and accordingly, the clock stuck-at switching unit 2044 may receive the target clock signal including the backup clock signal and the functional clock signal. Through the clock signal switching at the clock stuck-at switching unit 2044, the clock stuck-at switching unit 2044 may output a backup clock signal without clock stuck-at. Through the electrical connection between the second determination unit 2046 and the clock stuck-at switching unit 2044, the second determination unit 2046 may receive the backup clock signal output from the clock stuck-at switching unit 2044.

The second determination unit 2046 may determine the safe clock signal based on the backup clock signal output from one of the glitch-free clock switching unit 2042 and the clock stuck-at switching unit 2044.

In some optional implementations of the present disclosure, the second determination unit 2046, configured for determining the safe clock signal based on the backup clock signal output from one of the glitch-free clock switching unit and the clock stuck-at switching unit, may include:
the second determination unit 2046, configured for acquiring the fault type of the functional clock signal, determining a target switching unit, adapted to the fault type, from the glitch-free clock switching unit 2042 and the clock stuck-at switching unit 2044, and determining the safe clock signal based on the backup clock signal output from the target switching unit.

If the glitch-free clock switching unit 2042 receives a target clock signal including a backup clock signal and a functional clock signal, the glitch-free clock switching unit 2042 may determine whether the functional clock signal has a frequency fault, and obtain a first determination result. If it is determined by the glitch-free clock switching unit 2042 that the functional clock signal has a frequency fault, the first determination result may be a first value for indicating that there is the frequency fault. If it is determined by the glitch-free clock switching unit 2042 that the functional clock signal does not have a frequency fault, the first determination result may be a second value for indicating there is no frequency fault. As an example, the first value may be 1, and the second value may be 0.

If the clock stuck-at switching unit 2044 receives a target clock signal including a backup clock signal and a functional clock signal, the clock stuck-at switching unit 2044 may determine whether the functional clock signal has a stuck-at fault, and obtain a second determination result. If it is determined by the clock stuck-at switching unit 2044 that there is a stuck-at fault occurring in the functional clock signal, the second determination result may be a third value for indicating that there is a stuck-at fault. If it is determined by the clock stuck-at switching unit 2044 that there is no stuck-at fault in the functional clock signal, the second determination result may be a fourth value for indicating there is no stuck-at fault. As an example, the third value may be 1, and the fourth value may be 0.

The second determination unit 2046 may determine the fault type of the functional clock signal based on the first determination result and the second determination result. For example, if the first determination result is 1 and the second determination result is 0, it may be determined that the fault type of the functional clock signal is a frequency fault type. If the first determination result is 0 and the second determination result is 1, it may be determined that the fault type of the functional clock signal is a stuck-at fault type.

The second determination unit 2046 may determine a target switching unit, adapted to the fault type, from the glitch-free clock switching unit 2042 and the clock stuck-at switching unit 2044. For example, if the fault type is a frequency fault type, the second determination unit 2046 may determine the glitch-free clock switching unit 2042 as the target switching unit. If the fault type is a stuck-at fault type, the second determination unit 2046 may determine the clock stuck-at switching unit 2044 as the target switching unit. Based on the backup clock signal output from the target switching unit, the second determination unit 2046 may determine the safe clock signal.

In this way, referring to the fault type of the functional clock signal, the target switching unit may be reasonably selected from the glitch-free clock switching unit 2042 and the clock stuck-at switching unit 2044, and the backup clock signal output from the target switching unit is used for determining the safe clock signal. In the case of the functional clock signal having a frequency fault, the clock signal switching at the glitch-free clock switching unit 2042 is beneficial for avoiding glitches occurring in the switching process, so as to ensure the quality of the clock signal provided to the functional module 80. In the case of a stuck-at fault in the functional clock signal, the clock signal switching at the clock stuck-at switching unit 2044 is beneficial for providing a clock signal without a stuck-at fault to the functional module 80, and may also ensure the quality of the clock signal provided to the functional module 80.

In some other optional implementations of the present disclosure, as shown in FIG 6, the clock protection circuit 20 may further include:
a register 206, configured for storing signal frequency division configuration information.

The second determination unit 2046, configured for generating a safe clock signal based on the backup clock signal output from one of the glitch-free clock switching unit 2042 and the clock stuck-at switching unit 2044, may include:
the second determination unit 2046, configured for determining frequency requirement information respectively corresponding to a plurality of the functional modules 80 based on the signal frequency division configuration information, and performing frequency division processing on the backup clock signal output from one of the glitch-free clock switching unit 2042 and the clock stuck-at switching unit 2044 based on the respective frequency requirement information corresponding to the plurality of the functional modules 80 to obtain the safe clock signals respectively corresponding to the plurality of the functional modules 80.

Optionally, the second determination unit 2046 may be electrically connected to N functional modules 80. As an example, N may be 2, 3, 4, 5, etc., which are not listed here exhaustively. The second determination unit 2046 may be electrically connected to the register 206.

Optionally, the register 206 may store the signal frequency division configuration information transmitted by a configuration module. The signal frequency division configuration information may include: frequency requirement information to which the functional modules 80 included in the chip correspond, respectively; wherein the frequency requirement information to which anyone of the functional modules 80 corresponds is used for indicating the frequency of the clock signal that the functional module 80 needs to use.

Through the electrical connection between the second determination unit 2046 and the register 206, the second determination unit 2046 may acquire the signal frequency division configuration information stored in the register 206. The second determination unit 2046 may extract the frequency requirement information, respectively corresponding to the N functional modules 80 electrically connected to the second determination unit 2046, from the signal frequency division configuration information. According to the frequency requirement information respectively corresponding to the N functional modules 80, the second determination unit 2046 may perform frequency division processing on the backup clock signal output from the target switching unit to obtain the safe clock signals respectively corresponding to the N functional modules 80.

In one example, the N functional modules 80 are three functional modules 80, and the three functional modules 80 are respectively represented as IP1, IP2, and IP3. The frequency indicated by the frequency requirement information corresponding to IP1 is fl, the frequency indicated by the frequency requirement information corresponding to IP2 is f2, and the frequency indicated by the frequency requirement information corresponding to IP3 is f3. Then, by frequency division processing on the backup clock signal output from the target switching unit, a clock signal with a frequency of fl, a clock signal with a frequency of f2, and a clock signal with a frequency of f3 may be obtained. The clock signal with a frequency of f1 may be used as a safe clock signal corresponding to IP1. The clock signal with a frequency of f2 may be used as a safe clock signal corresponding to IP2. The clock signal with a frequency of f3 may be used as a safe clock signal corresponding to IP3.

In this way, by performing frequency division processing based on the signal frequency division configuration information stored in the register 206, the safe clock signals respectively corresponding to the plurality of the functional modules 80 may be obtained through a set of safety protection circuits, so as to meet the operation requirements of different functional modules 80.

Of course, the number of the functional modules 80 electrically connected to the second determination unit 2046 may not be more than one, but may be one, which is not limited by the present disclosure.

In the embodiments of the present disclosure, when a functional clock signal has a fault, through the collaborative operation of the glitch-free clock switching unit 2042, the clock stuck-at switching unit 2044 and the second determination unit 2046, a backup clock signal with better quality may be used for determining the safe clock signal, which is beneficial for ensuring the reliability of the clock signal used by the functional module 80.

In some optional examples, as shown in FIG 6, the clock protection circuit 20 may further include:
a register 206, configured for storing fault reporting configuration information;
a fault reporting module 208, configured for determining a fault reporting attribute based on the fault reporting configuration information, determining fault information to be reported based on a fault monitoring result and/or the fault type in response to the fault reporting attribute indicating that fault reporting is required, and reporting the fault information.

Optionally, the register 206 may store fault reporting configuration information transmitted by the configuration module, and the fault reporting configuration information may be used for indicating whether to mask the fault.

Optionally, the fault reporting module 208 may be a module for performing fault reporting. The fault reporting module 208 may be electrically connected to the register 206.

Through the electrical connection between the fault reporting module 208 and the register 206, the fault reporting module 208 may acquire the fault reporting configuration information stored in the register 206. If the fault reporting configuration information indicates that fault masking is not required, the fault reporting attribute determined by the fault reporting module 208 may indicate that the fault reporting is required. If the fault reporting configuration information indicates that the fault masking is required, the fault reporting attribute determined by the fault reporting module 208 may indicate that the fault reporting is not required.

If the fault reporting attribute indicates that fault reporting is required, the fault reporting module 208 may acquire the fault monitoring result. For example, the fault monitoring module 202 may store the fault monitoring result in the register 206, and the fault reporting module 208 may acquire the fault monitoring result stored in the register 206. In addition, the fault reporting module 208 may also acquire the fault type. For example, the glitch-free clock switching unit 2042 may store the aforementioned first determination result in the register 206, and the clock stuck-at switching unit 2044 may store the aforementioned second determination result in the register 206, and the fault reporting module 208 may acquire the first determination result and the second determination result stored in the register 206, and determine the fault type based on the first determination result and the second determination result. Based on the acquired fault monitoring result and/or fault type, the fault reporting module 208 may determine the fault information to be reported. The fault information to be reported may include the fault monitoring result and/or the fault type. The fault reporting module 208 may report the fault information.

If the fault reporting attribute indicates that the fault reporting is not required, the fault reporting module 208 may only record the fault monitoring result and the fault type without reporting the fault information.

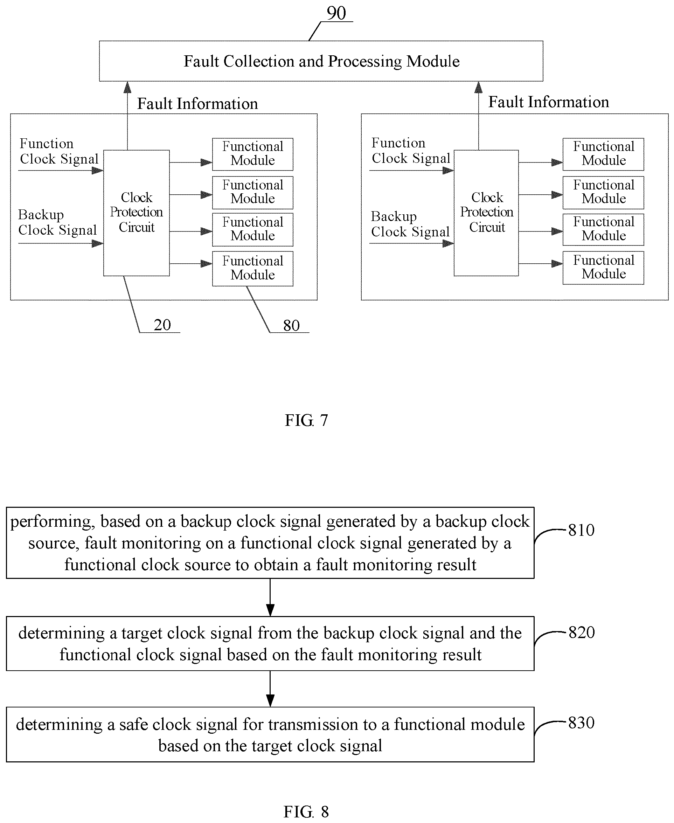

In one example, as shown in FIG 7, there may be two clock protection circuits 20 in the clock protection architecture, wherein each clock protection circuit 20 may be electrically connected to several functional modules 80. The fault reporting configuration information may indicate masking fault for the clock protection circuit 20 on the left side in FIG 7, and indicate not masking fault for the clock protection circuit 20 on the right side in FIG 7. Then, if it is detected, by the clock monitoring module 202 in the clock protection circuit 20 on the left side in FIG 7, that the functional clock signal has a fault, the fault reporting module 208 in the clock protection circuit 20 on the left side in FIG 7 may not report the fault information. If it is detected, the clock monitoring module 202 in the clock protection circuit 20 on the right side in FIG 7, that the functional clock signal has a fault, the fault reporting module 208 in the clock protection circuit 20 on the right side in FIG 7 may report the fault information, for example, the fault reporting module 208 in the clock protection circuit 20 on the right side in FIG 7 may transmit the fault information to a fault collection and processing module 90. The fault collection and processing module 90 may collect and classify fault information, and then report it to a central processing unit (CPU) so that upper layer applications may perceive the fault information.

In the embodiments of the present disclosure, it may be flexibly controlled, through information configuration, whether to report fault information, which may be convenient for upper-layer applications to perceive fault information on the one hand, and avoid resource consumption and power consumption caused by unnecessary information reporting on the other hand.

In some optional examples, as shown in FIG 6, the clock protection circuit 20 may further include:
a register 206, configured for storing signal frequency division configuration information;
the clock processing module 204, configured for determining the safe clock signal for transmission to the functional module 80 based on the target clock signal, includes:
the clock processing module 204, configured for determining the respective frequency requirement information corresponding to the plurality of the functional modules 80 in response to the determining the functional clock signal as the target clock signal based on the signal frequency division configuration information, and performing frequency division processing on the functional clock signal based on the frequency requirement information corresponding to respectively the plurality of the functional modules 80 to obtain the safe clock signals respectively corresponding to the plurality of the functional modules 80.

It should be noted that the specific implementation of this embodiment may refer to the earlier description of, for the case where the target clock signal includes a functional clock signal and a backup clock signal, determining the frequency requirement information based on the signal frequency division configuration information stored in register 206, and further performing the frequency division processing, which is not repeated here.

In the case where the functional clock signal is determined as the target clock signal, by performing frequency division processing based on the signal frequency division configuration information stored in the register 206 the safe clock signals corresponding to the plurality of the functional modules 80 may be obtained through a set of safety protection circuits, so as to meet the operation requirements of different functional modules 80.

In summary, according to the embodiments of the present disclosure, through providing two types of clock sources, when a functional clock signal has a fault, it is possible to quickly switch to using the backup clock source 60, which is beneficial for ensuring the reliability of the clock signal used by the functional module 80, effectively reducing the adverse effects of clock faults, and ensuring the normal operation of the chip.

### Exemplary Methods

FIG 8 is a schematic flowchart of a clock protection method provided by some exemplary embodiments of the present disclosure. The method, as shown in FIG 8, may include Steps 810, 820, and 830.

Step 810: performing, based on a backup clock signal generated by a backup clock source, fault monitoring on a functional clock signal generated by a functional clock source to obtain a fault monitoring result.

Step 820: determining a target clock signal from the backup clock signal and the functional clock signal based on the fault monitoring result.

Step 830: determining a safe clock signal for transmission to a functional module based on the target clock signal.

In the embodiments of the present disclosure, regardless of whether there is an abnormality in the functional clock signal, a clock signal (i.e., a safe clock signal) required for the operation of the functional module and having no fault may be provided to the functional module, which is beneficial for ensuring the reliability of the clock signal used by the functional module, thereby ensuring the normal and reliable operation of the functional module and the normal operation of the chip where the functional module is located.

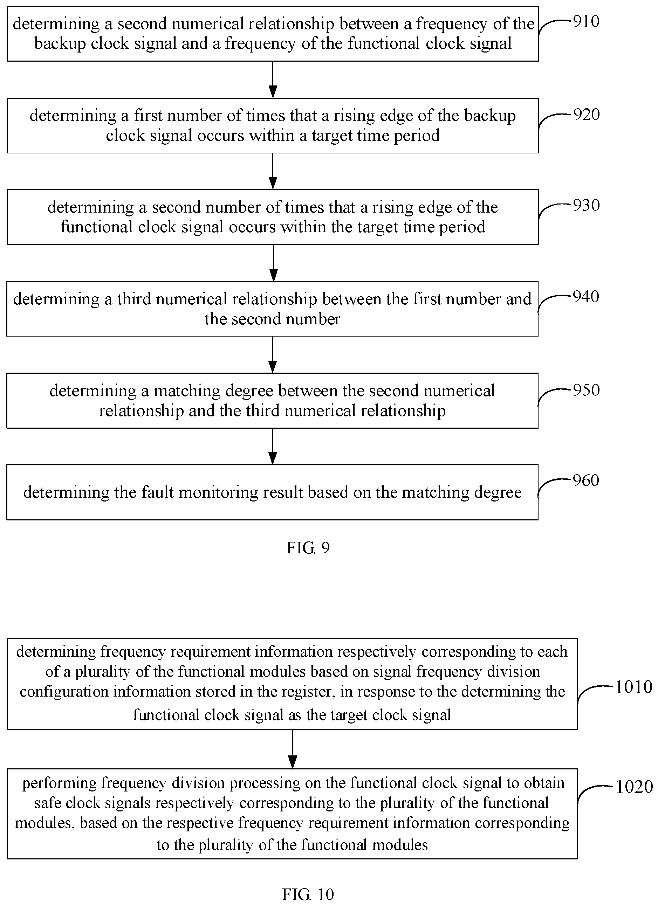

In some optional examples, as shown in FIG 9, Step 810 may include Step 910, Step 920, Step 930, Step 940, Step 950, and Step 960.

Step 910: determining a second numerical relationship between a frequency of the backup clock signal and a frequency of the functional clock signal.

Optionally, the functional clock source may be configured for generating a functional clock signal with a first frequency, and the backup clock source may be configured for generating a backup clock signal with a second frequency. That is, the frequency of the functional clock signal generated by the functional clock source is theoretically the first frequency, and the frequency of the backup clock signal generated by the backup clock source is theoretically the second frequency. In Step 910, a proportional relationship between the first frequency and the second frequency may be determined, and the determined proportional relationship may be used as the second numerical relationship.

Step 920: determining a first number of times that a rising edge of the backup clock signal occurs within a target time period.

Optionally, a duration of the target time period may be set according to actual conditions. As an example, the duration of the target time period may be 1 second, 2 seconds, 3 seconds, etc., which are not listed here exhaustively.

In Step 920, a waveform of the backup clock signal may be detected to count a total number of rising edges of the backup clock signal occurring within the target time period, and the total number may be used as the first number.

Step 930: determining a second number of times that a rising edge of the functional clock signal occurs within the target time period.

In Step 930, a waveform of the functional clock signal may be detected to count the total number of rising edges of the functional clock signal within the target time period, and the total number may be used as the second number.

Step 940: determining a third numerical relationship between the first number and the second number.

In Step 940, a proportional relationship between the first number and the second number may be determined, and the determined proportional relationship may be used as the third numerical relationship.

Step 950: determining a matching degree between the second numerical relationship and the third numerical relationship.

Optionally, the second numerical relationship may be a first ratio of the first frequency to the second frequency, and the third numerical relationship may be a second ratio of the first number to the second number. If the first ratio and the second ratio are equal or substantially equal, the matching degree between the second numerical relationship and the third numerical relationship may be determined as 1. If the first ratio and the second ratio are different significantly, the matching degree between the second numerical relationship and the third numerical relationship may be determined as 0.

Step 960: determining the fault monitoring result based on the matching degree.

Optionally, if the matching degree is 1, the fault monitoring result may be used for indicating that the functional clock signal has no fault. If the matching degree is 0, the fault monitoring result may be used for indicating that the functional clock signal has a fault.

It should be noted that, when the frequency of the backup clock signal and the frequency of the functional clock signal satisfies a certain proportional relationship, if the functional clock signal has no fault, the number of times that a rising edge of the backup clock signal occurs within the target time period and the number of times that a rising edge of the functional clock signal occurs within the target time period should theoretically also satisfy a corresponding proportional relationship. In view of this, through determining the second numerical relationship and the third numerical relationship, and further the matching degree between the second numerical relationship and the third numerical relationship. Based on the determined matching degree, it is possible to determine whether an actual situation matches a theoretical situation when the functional clock signal has no fault, then it is possible to efficiently and reliably infer whether the functional clock signal has a fault, thereby obtaining a fault monitoring result.

In some optional examples, Step 820 may include:
determining, in response to the fault monitoring result indicating that the functional clock signal has a fault, a target clock signal including a backup clock signal and the functional clock signal.

In some optional examples, Step 820 may include:
determining, in response to the fault monitoring result indicating that the functional clock signal has no fault, the functional clock signal as the target clock signal.

In some optional examples, as shown in FIG 10, Step 830 may include Step 1010 and Step 1020.

Step 1010: determining frequency requirement information respectively corresponding to a plurality of the functional modules based on signal frequency division configuration information stored in the register, in response to the determining the functional clock signal as the target clock signal.

Step 1020: performing frequency division processing on the functional clock signal to obtain safe clock signals respectively corresponding to the plurality of the functional modules, based on the respective frequency requirement information corresponding to the plurality of the functional modules.

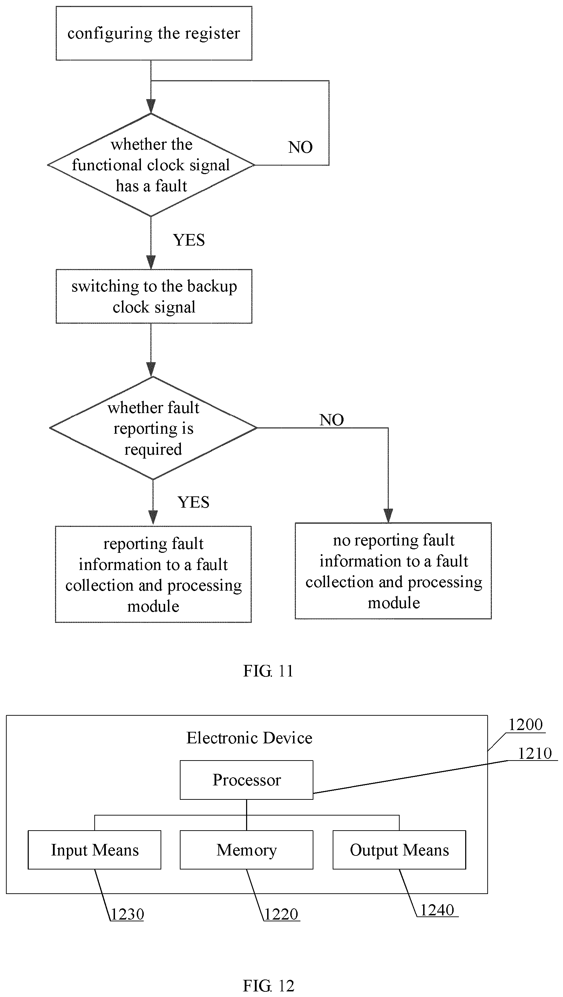

In some optional examples, as shown in FIG 11, the register may be configured firstly. For example, fault reporting configuration information, signal frequency division configuration information, etc. may be stored in the register 206 mentioned above. Next, it may be determined whether the functional clock signal has a fault. For example, it may be determined whether the functional clock signal has a fault based on whether the second interaction unit 2024 and the first interaction unit 2022 mentioned above may shake hands normally. If the functional clock signal has a fault, it is possible to switch to the backup clock signal. For example, a safe clock signal for transmission to the functional module 80 may be determined based on the backup clock signal output from the target switching unit mentioned above. In addition, it may be determined, based on the fault reporting configuration information, whether fault reporting is required. If the fault reporting is required, the fault information may be reported to a fault collection and processing module. If the fault reporting is not required, the fault information may not be reported to the fault collection and processing module.

In the method disclosed in the present invention, various optional embodiments, optional implementations and optional examples disclosed in a section of the above exemplary circuit may be flexibly selected and combined as needed to achieve corresponding functions and effects, which are not listed exhaustively in the present invention.

### Exemplary Electronic Device

FIG 12 illustrates a block diagram of an electronic device according to an embodiment of the present disclosure. The electronic device 1200 includes one or more processors 1210 and a memory 1220.

The processor 1210 may be a central processing unit (CPU) or other forms of processing units having data processing capabilities and/or instruction execution capabilities, and may control other components in the electronic device 1200 to perform desired functions.

The memory 1220 may include one or more computer program products, which may include various forms of computer-readable storage media, such as volatile memory and/or non-volatile memory. Volatile memory may include, for example, random access memory (RAM) and/or cache, etc. Non-volatile memory may include, for example, read-only memory (ROM), hard disk, flash memory, etc. One or more computer program instructions may be stored on the computer-readable storage medium, and the processor 1210 may execute the one or more computer program instructions to implement the methods of the various embodiments of the present disclosure described above and/or other desired functions.

In one example, the electronic device 1200 may further include an input means 1230 and an output means 1240. These components are interconnected via a bus system and/or other forms of connection mechanisms (not shown).

The input means 1230 may include, for example, a keyboard, a mouse, etc.

The output means 1240 may output various information to the outside, and may include, for example, a display, a loudspeaker, a printer, a communication network and a remote output means connected thereto, etc.

Of course, for simplicity, FIG 12 shows only some of the components, related to the present disclosure, in the electronic device 1200, omitting components such as a bus, an input / output interface, etc. In addition, the electronic device 1200 may further include any other appropriate components depending on specific application scenarios.

### Exemplary Computer Program Product And Computer Readable Storage Medium

In addition to the above-mentioned methods and devices, an embodiment of the present disclosure may also be a computer program product including computer program instructions, where the computer program instructions when executed by a processor, cause the processor to implementing the steps of the method according to various embodiments of the present disclosure described in the above-mentioned "Exemplary Method" section of this specification.

The computer program product may be program code, written with one or any combination of a plurality of programming languages, for performing the operations in the embodiments of the present disclosure. The programming languages include an object-oriented programming language such as Java or C++, and also include conventional procedural programming languages such as a "C" language or similar programming languages. The program code may be executed entirely or partly on a user computing device, executed as a standalone software package, executed partly on the user computing device and executed partly on a remote computing device, or executed entirely on the remote computing device or a server.

In addition, embodiments of the present disclosure may also be a computer-readable storage medium on which computer program instructions are stored, where the computer program instructions, when executed by a processor, causes the processor to implement the steps of the method according to various embodiments of the present disclosure described in the above "Exemplary Method" section of this specification.

The computer-readable storage medium may adopt any combination of one or more readable media. The readable medium may be a readable signal medium or a readable storage medium. The readable storage medium may include, but is not limited to, an electrical, magnetic, optical, electromagnetic, infrared, or semiconductor system, apparatus or device, or any combination thereof. More specific examples (non-exhaustive list) of the readable storage medium include: an electrical connection with one or more wires, a portable disk, a hard disk, a random access memory ( RAM ), a read-only memory ( ROM ), an erasable programmable read-only memory ( EPROM or flash memory), an optical fiber, a portable compact disk read-only memory ( CD-ROM ), an optical storage device, a magnetic storage device, or any suitable combination thereof.

The basic principles of the present disclosure have been described above in conjunction with specific embodiments. However, the advantages, benefits, effects, etc. mentioned in the present disclosure are merely illustrative and not restrictive, and they should not construed as essential to all embodiments. The specific details disclosed above are provided for exemplary and illustrative purposes only, not as limitations, and these details do not restrict the present disclosure to implementation using only these specific details.

Those skilled in the art may make various modifications and variations to the present disclosure without departing from the spirit and scope of the application. Therefore, if such modifications and variations fall within the scope of the claims of the present disclosure and their equivalents, the present disclosure is also intended to cover these modifications and variations.

## Claims

1. A clock protection circuit, **characterized in that** the clock protection circuit comprises:
a clock monitoring module (202), configured for performing, based on a backup clock signal generated by a backup clock source, fault monitoring on a functional clock signal generated by a functional clock source to obtain a fault monitoring result, and determining a target clock signal from the backup clock signal and the functional clock signal based on the fault monitoring result;
a clock processing module (204), configured for determining a safe clock signal for transmission to a functional module based on the target clock signal.

2. The clock protection circuit according to claim 1, wherein the clock monitoring module (202) comprises a first interaction unit (2022), a second interaction unit (2024) and a first determination unit (2026);
the clock monitoring module (202), configured for performing, based on the backup clock signal generated by the backup clock source, fault monitoring on the functional clock signal generated by the functional clock source to obtain a fault monitoring result, comprises:
the first interaction unit (2022), configured for generating a handshake request in response to a rising edge occurring in the backup clock signal;
the second interaction unit (2024), configured for generating a response to the handshake request under driving of the functional clock signal in response to receiving the handshake request;
the first determination unit (2026), configured for counting a number of times the second interaction unit (2024) fails to generate the response within a preset time period after receiving the handshake request, determining a first numerical relationship between the counted number of times and a preset number of times, and determining the fault monitoring result based on the first numerical relationship.

3. The clock protection circuit according to claim 1, wherein the clock monitoring module (202), configured for determining the target clock signal from the backup clock signal and the functional clock signal based on the fault monitoring result, comprises:
the clock monitoring module (202), configured for determining the target clock signal including the backup clock signal and the functional clock signal in response to the fault monitoring result indicating that the functional clock signal has a fault;
or,
the clock monitoring module (202), configured for determining the functional clock signal as the target clock signal in response to the fault monitoring result indicating that the functional clock signal has no fault.

4. The clock protection circuit according to any one of claims 1 to 3, wherein the clock processing module (204) comprises: a glitch-free clock switching unit (2042), a clock stuck-at switching unit (2044) and a second determination unit (2046);
the clock processing module (204), configured for determining a safe clock signal for transmission to a functional module based on the target clock signal, comprises:
the glitch-free clock switching unit (2042), configured for outputting the backup clock signal in response to receiving the target clock signal including the backup clock signal and the functional clock signal;
the clock stuck-at switching unit (2044), configured for outputting the backup clock signal in response to receiving the target clock signal including the backup clock signal and the functional clock signal;
the second determination unit (2046), configured for determining the safe clock signal based on the backup clock signal output from one of the glitch-free clock switching unit (2042) and the clock stuck-at switching unit (2044).

5. The clock protection circuit according to claim 4, wherein the second determination unit (2046), configured for determining the safe clock signal based on the backup clock signal output from one of the glitch-free clock switching unit (2042) and the clock stuck-at switching unit (2044), comprises:
the second determination unit (2046), configured for acquiring a fault type of the functional clock signal, determining a target switching unit adapted to the fault type from the glitch-free clock switching unit (2042) and the clock stuck-at switching unit (2044), and determining the safe clock signal based on the backup clock signal output from the target switching unit.

6. The clock protection circuit according to claim 5, further comprising:
a register (206) configuring for storing fault reporting configuration information;
a fault reporting module (208), configured for determining a fault reporting attribute based on the fault reporting configuration information, determining fault information to be reported based on the fault monitoring result and/or the fault type in response to the fault reporting attribute indicating that fault reporting is required, and reporting the fault information.

7. The clock protection circuit according to claim 4, further comprising:
a register (206), configured for storing signal frequency division configuration information;
a second determination unit (2046), configured for generating the safe clock signal based on the backup clock signal output from one of the glitch-free clock switching unit (2042) and the clock stuck-at switching unit (2044), comprises:
the second determination unit (2046), configured for determining respective frequency requirement information corresponding to a plurality of the functional modules based on the signal frequency division configuration information, and performing frequency division processing on the backup clock signal output from one of the glitch-free clock switching unit (2042) and the clock stuck-at switching unit (2044) based on the respective frequency requirement information corresponding to the plurality of the functional modules to obtain the safe clock signals respectively corresponding to the plurality of the functional modules.

8. The clock protection circuit according to any one of claims 1 to 3, wherein the clock protection circuit further comprises:
a register (206), configured for storing signal frequency division configuration information;
the clock processing module (204), configured for determining a safe clock signal for transmission to a functional module based on the target clock signal, comprises:
the clock processing module (204), configured for determining the functional clock signal as the target clock signal, determining respective frequency requirement information corresponding to the plurality of the functional modules based on the signal frequency division configuration information, and performing frequency division processing on the functional clock signal based on the respective frequency requirement information corresponding to the plurality of the functional modules to obtain the safe clock signals respectively corresponding to the plurality of the functional modules.

9. A clock protection method, **characterized in that** the clock protection method comprises:
performing (810), based on a backup clock signal generated by a backup clock source, a fault monitoring on a functional clock signal generated by a functional clock source to obtain a fault monitoring result;
determining (820) a target clock signal from the backup clock signal and the functional clock signal based on the fault monitoring result;
determining (830) a safe clock signal for transmission to a functional module based on the target clock signal.

10. The clock protection method according to claim 9, wherein the performing (810), based on the backup clock signal generated by the backup clock source, fault monitoring on the functional clock signal generated by the functional clock source to obtain the fault monitoring result comprises:
determining (910) a second numerical relationship between a frequency of the backup clock signal and a frequency of the functional clock signal;
determining (920) a first number of times that a rising edge of the backup clock signal occurs within a target time period;
determining (930) a second number of times that a rising edge of the functional clock signal occurs within the target time period;
determining (940) a third numerical relationship between the first number and the second number;
determining (950) a matching degree between the second numerical relationship and the third numerical relationship;
determining (960) the fault monitoring result based on the matching degree.

11. The clock protection method according to claim 9, wherein the determining (820) the target clock signal from the backup clock signal and the functional clock signal based on the fault monitoring result, further comprises:
determining, in response to the fault monitoring result indicating that the functional clock signal has a fault, a target clock signal including a backup clock signal and the functional clock signal.

12. The clock protection method according to claim 9, wherein the determining (820) the target clock signal from the backup clock signal and the functional clock signal based on the fault monitoring result, further comprises:
determining, in response to the fault monitoring result indicating that the functional clock signal has no fault, the functional clock signal as the target clock signal.

13. The clock protection method according to claim 9, wherein determining (830) the safe clock signal for transmission to the functional module based on the target clock signal comprises:
determining (1010) frequency requirement information respectively corresponding to a plurality of the functional modules based on signal frequency division configuration information stored in the register, in response to the determining the functional clock signal as the target clock signal;
performing (1020) frequency division processing on the functional clock signal to obtain safe clock signals respectively corresponding to the plurality of the functional modules, based on the respective frequency requirement information corresponding to the plurality of the functional modules.

14. A computer-readable storage medium, on which a computer program is stored, wherein the computer program, when executed by a processor, causes the processor to implement the clock protection method according to anyone of claims 9 to 13.

15. An electronic device (1200), **characterized in that** the electronic device comprises:
a processor (1210);
a memory (1220) for storing instructions executable by the processor,
wherein the processor (1210) is configured for reading the executable instructions from the memory (1220) and execute the instructions to implement the clock protection method according to anyone of claims 9 to 13.
